# EUROPÄISCHE PATENTSCHRIFT

(11) **EP 3 687 875 B1**
(45) Veröffentlichungstag und Bekanntmachung des Hinweises auf die Patenterteilung: **10.11.2021**
(21) Anmeldenummer: 18779294.0
(22) Anmeldetag: 19.09.2018
(51) Int. Cl.: B60W 40/13, B60W 50/00, B60W 40/112

(54) **VERFAHREN ZUR ERMITTLUNG DER LAGE DES SCHWERPUNKTS EINES FAHRZEUGS**
METHOD FOR ASCERTAINING THE POSITION OF THE CENTER OF GRAVITY OF A VEHICLE
PROCÉDÉ PERMETTANT DE DÉTERMINER LA POSITION DU CENTRE DE GRAVITÉ D'UN VÉHICULE

(30) Priorität: 28.09.2017 DE 102017217326; 22.11.2017 DE 102017220860
(43) Veröffentlichungstag der Anmeldung: 05.08.2020
(73) Patentinhaber: Continental Teves AG & Co. OHG, 60488 Frankfurt am Main (DE)
(72) Erfinder: ZHANG, Chen, 60488 Frankfurt am Main (DE); BERNHARD, Sebastian, 60488 Frankfurt am Main (DE); KUNTSCHAR, Andreas, 60488 Frankfurt am Main (DE)
(74) Vertreter: Continental Corporation
(86) Internationale Anmeldenummer: PCT/EP2018/075300
(87) Internationale Veröffentlichungsnummer: WO 2019/063376

(56) Entgegenhaltungen:
- CN-A- 106 056 150
- DE-A1-102013 211 243
- DE-A1-102014 200 987
- DE-T5-112013 006 626
- US-A1- 2011 172 877

## Beschreibung

Die Erfindung betrifft ein Verfahren, bei dem die Lage des Schwerpunkts eines fahrenden Kraftfahrzeugs ermittelt wird, wobei mindestens ein Satz von zusammengehörenden Eingangsgrößen berücksichtigt wird. Der Satz von Eingangsgrößen umfasst mindestens eine Längsbeschleunigung des Kraftfahrzeugs, eine Querbeschleunigung des Kraftfahrzeugs, eine Gierrate des Kraftfahrzeugs und mindestens eine Raddrehzahl. Die Erfindung betrifft auch ein elektronisches Steuergerät.

Bei bekannten Verfahren zur Schätzung einer Schwerpunktlage wird die laterale Schwerpunktkoordinate y meistens vernachlässigt und die longitudinale Koordinate x teilweise als bekannt vorausgesetzt oder zu Null angenommen. Die Schätzgüte der Schwerpunkthöhe z ist oftmals nicht zufriedenstellend.

Aus der DE 10 2013 211 243 A1 ist ein Verfahren zur Bestimmung der Fahrzeugmasse bekannt, bei der ein Geschwindigkeitssignal,ein Längsbeschleunigungssignal, ein Bremssignal und ein Antriebssignal betrachtet werden. Es wird eine Kräftebilanz der Längsdynamik des Kraftfahrzeugs ausgewertet und das Längsbeschleunigungssignal von einem Inertialsensor gemessen. Die Fahrzeugmasse wird dann anhand einer statistischen Auswertung von Rohmassenwerte ermittelt, welche zumindest eine Mittelwertbildung umfasst.

Aus der US 2011 172877 A1 ist ein Verfahren zur Fahrzeugmassebestimmung aus den Daten eines Beschleunigungssensors bekannt. Dabei werden neben den Beschleunigungssensordaten auch zeitlich zusammenhängende Daten der Antriebsleistung des Fahrzeugs verwendet.

Aus der DE 11 2013 006 626 T5 ist bekannt, einen Schwerpunktzustand eines Fahrzeugs in einer Fahrzeugbreitenrichtung auf der Grundlage einer abgeschätzten Hinterradachslast zu bestimmen, wobei die Hinterachslast durch Bremsen bei einer Geradeausfahrt, einer Rechtskurvenfahrt und einer Linkskurvenfahrt abgeschätzt wird.

Aus der DE 10 2014 200 987 A1 ist ein Verfahren bekannt, bei dem die Lage des Schwerpunkts eines fahrenden Kraftfahrzeugs ermittelt wird, wobei mindestens zwei Datenpunkte aus zusammengehörigen Eingangsgrößen umfassend zumindest eine Beschleunigung des Kraftfahrzeugs, Radgeschwindigkeiten von mindestens zwei, insbesondere vier, Rädern und an diesen Rädern anliegende Antriebs- oder Bremsmomenten berücksichtigt werden. Zumindest eine Schwerpunktkoordinate in einem fahrzeugfesten Koordinatensystem und zumindest ein Anpassungsparameter einer Reibwertkennlinie werden gemeinsam ermittelt.

Bekannte Verfahren haben den Nachteil, dass viele Fahrzeugparameter im Vorfeld bekannt sein müssen, und eine Schätzung oft nur für eine oder zwei Koordinaten, nicht alle drei Raumkoordinaten erfolgt. Es folgt oft eine geringe Schätzgüte der vertikalen Schwerpunktkoordinate und die Schwerpunktkoordinaten sind miteinander verkoppelt. Bestehende lernbasierter Ansätze benötigt eine sehr hohe Anzahl an Klassifizierern. Teilweise wird hohe Rechenleistung vorausgesetzt, was kostenintensiv ist und im fahrenden Fahrzeug oft nicht umgesetzt werden kann.

Es ist daher Aufgabe der Erfindung, ein Verfahren zur Ermittlung einer Schwerpunktlage anzugeben, welches robust, genau und eigenständig ist und dabei eine geringere Rechenleistung benötigt.

Erfindungsgemäß wird der Satz von Eingangsgrößen während eines stationären Fahrmanövers ermittelt, und eine Menge an möglichen Schwerpunktlagen als Klassen festgelegt und mittels einer lernbasierten Klassifizierungsmethode anhand des Satzes von Eingangsgrößen eine Klasse ausgewählt, die eine geschätzte Schwerpunktlage angibt.

Unter einem Satz von zusammengehörenden Eingangsgrößen wird dabei ein Datenset von verschiedenen Fahrdynamikgrößen verstanden, die gleichzeitig gemessen oder ermittelt werden bzw. den Fahrzustand des Kraftfahrzeugs zu einem Zeitpunkt beschreiben. Die verschiedenen Fahrdynamikgrößen umfassen mindestens eine Längsbeschleunigung des Kraftfahrzeugs, eine Querbeschleunigung des Kraftfahrzeugs, eine Gierrate des Kraftfahrzeugs und mindestens eine Raddrehzahl. Bevorzugt umfasst der Satz von Eingangsgrößen vier Raddrehzahlen.

Das erfindungsgemäße Verfahren hat den Vorteil, dass keine Fahrzeugparameter im Schätz-Algorithmus benötigt werden. Die Anzahl von Klassifizierern und Modellparametern ist deutlich reduziert. Die Schätzgüte der vertikalen Schwerpunktkoordinate wird verbessert. Das Verfahren erreicht eine erhöhte Robustheit gegenüber Messrauschen, vor allem mittelwertfreiem Messrauschen. Außerdem wird eine hohe Robustheit gegenüber Offset des Masseschätzers und des Straßenreibwerts erreicht.

Bevorzugt werden mehrere Raddrehzahlen erfasst, besonders bevorzugt eine Raddrehzahl für jedes Rad des Fahrzeugs. Werden mehrere Raddrehzahlen erfasst, so wird vorteilshafterweise ein Mittelwert oder gewichteter Mittelwert der Raddrehzahlen berechnet. Der Mittelwert bzw. gewichteter Mittelwert der Raddrehzahlen wird als Eingangsgröße (mittlere Raddrehzahl) verwendet. Ein Mittelwert bzw. gewichteter Mittelwert ist robuster gegen Messfehler als eine einzelne Raddrehzahl.

Bevorzugt wird unter Verwendung von Simulationsdaten eines Modells des Kraftfahrzeugs eine nichtlineare Zuordnung zwischen Sätzen von Eingangsgrößen und Klassen von Schwerpunktlagen eingelernt. Unter einer nichtlinearen Zuordnung wird dabei eine Zuordnung verstanden, bei der kein proportionaler Zusammenhang zwischen Eingangsgrößen und Koordinaten der Schwerpunktlage vorausgesetzt wird.

Der lernbasierte Klassifikationsalgorithmus wird dazu verwendet, eine nichtlineare Zuordnung zwischen Fahrdynamikdaten (Standard-ESP-Sensordaten) und zugehörigen Schwerpunktlagen abzubilden. Die Zuordnung erfolgt bevorzugt über einen Trainingsprozess, während dessen Simulationsdaten generiert werden. Anschließend kann z.B. ein Random Forest Klassifizierer für die Schätzung der x- und y-Koordinate verwendet werden.

Während des Trainingsprozesses wird bevorzugt ein Raum möglicher Schwerpunktlagen definiert und eine Menge an zu lernenden Schwerpunktlagen als Klassen festgelegt. Die nichtlineare Zuordnung zwischen Sensordaten und zugehörigen Schwerpunktlagen wird bevorzugt unter der Verwendung von Simulationsdaten eines Modells des Zielfahrzeugs gelernt. Dabei wird bevorzugt eine Klassifizierungsmethode verwendet, welche eine Ausgabe der Wahrscheinlichkeit jeder einzelnen Klasse bereitstellt. Vorteilhafterweise bietet sich das Verfahren Random Forest an. Alternativ kann eine Import Vector Machine verwendet werden.

Nach Abschluss des Trainingsprozesses kann das Verfahren zur Ermittlung der Schwerpunktlage eines Kraftfahrzeugs angewendet werden. Die Klassifizierungsmethode ist bevorzugt in einem Klassifizierer implementiert, welcher Klassifizierungen anhand der im Trainingsprozess eingelernten Zuordnungen durchführt.

Bevorzugt umfasst der Satz von Eingangsgrößen einen Lenkwinkel.

Bevorzugt umfasst der Satz von Eingangsgrößen einen Schätzwert einer Gesamtmasse des Kraftfahrzeugs.

An Stelle der Gesamtmasse des Kraftfahrzeugs kann ein Schätzwert einer Zulademasse als Eingangsgröße in die Berechnung eingehen. Die Gesamtmasse und die Zulademasse lassen sich unter Kenntnis der Leermasse des Kraftfahrzeugs ineinander umrechnen.

Bevorzugt sind die Eingangsgrößen die kontinuierlichen Sensorsignale Längs- und Querbeschleunigung, Gierrate, Lenkwinkel und mindestens einer, aber bestenfalls alle vier, Raddrehzahlen sowie ein Schätzwert für die aktuelle Gesamtmasse des Fahrzeugs.

Bevorzugt werden die Längsbeschleunigung des Kraftfahrzeugs, die Querbeschleunigung des Kraftfahrzeugs, die Gierrate des Kraftfahrzeugs und die Raddrehzahl durch eine Sensorik eines Fahrstabilitätssystems erfasst. Das Zurückgreifen auf Messgrößen, welche von dem Fahrstabilitätssystems und dessen ESP-Standard-Sensorik bereits erfasst werden, hat den Vorteil, dass ein niedriger Aufwand für die Schätzung der longitudinalen und der lateralen Schwerpunkt-Koordinate resultiert.

Bevorzugt wird das Verfahren durch eine Recheneinheit ausgeführt, welche an der/den Schnittstelle (n) eines ESP-Steuergeräts die genannten Größen ausliest.

Bevorzugt wird ein stationäres Fahrmanöver erkannt, wenn über einen vorgegebenen Zeitraum eine Fahrzeuggeschwindigkeit, die Querbeschleunigung und/oder Gierrate und/oder der Lenkwinkel konstant sind.

Vorteilhafterweise wird ein stationäres Fahrmanöver erkannt, wenn über einen vorgegebenen Zeitraum eine Fahrzeuggeschwindigkeit konstant ist und zusätzlich über den vorgegebenen Zeitraum mindestens eine der Größen Querbeschleunigung, Gierrate oder Lenkwinkel konstant ist.

Besonders bevorzugt wird die Fahrzeuggeschwindigkeit anhand der Raddrehzahl oder anhand der gemittelten Raddrehzahl bestimmt.

Bevorzugt wird ein stationäres Fahrmanöver erkannt, wenn über den vorgegebenen Zeitraum:
- die Varianz der Fahrzeuggeschwindigkeit unterhalb eines ersten Schwellenwerts liegt, sowie
- die Varianz der Querbeschleunigung unterhalb eines zweiten Schwellenwerts liegt, und/oder
- die Varianz der Gierrate unterhalb eines vierten Schwellenwerts liegt, und/oder
- die Varianz des Lenkwinkels unterhalb eines dritten Schwellenwerts liegt.

Vorteilhafterweise wird eine Fahrdynamikgröße (Querbeschleunigung, Gierrate, Lenkwinkel) als während eines Zeitraums konstant betrachtet, wenn die Varianz der Fahrdynamikgröße während des Zeitraums unterhalb des jeweiligen Schwellenwerts liegt.

Bevorzugt werden mindestens zwei Sätze von Eingangsgrößen für die Bestimmung der Schwerpunktlage berücksichtigt, wobei ein erster Satz von Eingangsgrößen während eines ersten stationären Fahrmanövers ermittelt wird und ein zweiter Satz von Eingangsgrößen während eines zweiten stationären Fahrmanövers ermittelt wird. Die Verwendung mehrerer Sätzen von Eingangsgrößen führt zu einer verbesserten Präzision des Verfahrens.

Besonders bevorzugt werden mindestens drei Sätze von Eingangsgrößen für die Bestimmung der Schwerpunktlage berücksichtigt, wobei ein dritter Satz von Eingangsgrößen während eines dritten stationären Fahrmanövers ermittelt wird. Dies ermöglicht eine weitere Verbesserung der Präzision.

Bevorzugt werden mittels der Klassifizierungsmethode mindestens zwei Zwischenergebnisse anhand unterschiedlicher Sätze von Eingangsgrößen ermittelt.

Besonders bevorzugt wird je ein Zwischenergebnis anhand des ersten Satzes von Eingangsgrößen und anhand des zweiten Satzes von Eingangsgrößen ermittelt.

Besonders bevorzugt wird die geschätzte Schwerpunktlage anhand der mindestens zwei Zwischenergebnisse berechnet. Vorteilhafterweise erfolgt die Berechnung der geschätzten Schwerpunktlage aus den Zwischenergebnissen mittels einer Minimum Mean Square Error (MMSE) Methode.

Während die Klassen eine Diskretisierung des Raumes darstellen, stellt der MMSE-Schätzwert den Erwartungswert im dreidimensionalen Raum dar und kann jede Position einnehmen, auch zwischen den Positionen der Klassen. Die durch das Verfahren ermittelte Lage des Schwerpunktes entspricht bevorzugt der mittels MMSE berechneten geschätzten Schwerpunktlage. Dies ermöglicht eine Verrechnung der Zwischenergebnisse zu einer resultierenden Schwerpunktlage, welche besonders genaue Ergebnisse liefert.

Bevorzugt wird eine Anzahl *n* (*n* ≥ 2) von Sätzen von Eingangsgrößen berücksichtigt und für jeden der Sätze ein Zwischenergebnis ermittelt. Die Berechnung der geschätzten Schwerpunktlage wird anhand der n Zwischenergebnisse ermittelt, bevorzugt mittels einer Minimum Mean Square Error Methode.

Besonders bevorzugt unterscheidet sich das erste Fahrmanöver von dem zweiten Fahrmanöver. Die Verwendung unterschiedlicher Fahrmanöver hat sich als besonders genau erwiesen.

Bevorzugt wird jedes stationäre Fahrmanöver nach seiner Art eingeteilt in stationäre Linkskurve, stationäre Rechtskurve, oder stationäre Geradeausfahrt.

Bevorzugt wird der Fahrzustand mittels Varianzberechnung der Beschleunigungen und Gierrate auf einen stationären Zustand überprüft und dessen Art "Stationäre Geradeausfahrt", "Stationäre Linkskurve" oder "Stationäre Rechtskurve" bestimmt.

Bevorzugt beinhaltet das Verfahren eine automatische Erkennung gültiger stationärer Fahrmanöver. Die Eingangsgrößen der Erkennung sind die Längs- und Querbeschleunigung sowie die Gierrate des Fahrzeugs und optional der Lenkwinkel. Jeder Abtastzeitpunkt wird mittels der Berechnung der Varianz jeder Eingangsgröße der Erkennung im Bereich eines verschiebbaren Zeitfensters und unter Vorgabe eines Schwellenwertes auf einen stationären Zustand überprüft. Liegt ein stationärer Zustand vor, so wird die Art des Manövers anhand der Gierrate und/oder der Querbeschleunigung bestimmt.

Dies bietet den Vorteil, dass stationäre Zustände und deren Art (Geradeausfahrt, Linkskurve, Rechtskurve) automatisch erkannt werden und der Schwerpunktschätzung als Merkmalsvektor dem weiteren Verfahren zur Verfügung gestellt werden.

Im Einzelnen umfassen die Manöver bevorzugt die stationäre Linkskurve, die stationäre Rechtskurve und die stationäre Geradeausfahrt. Jedes dieser Manöver ist durch einen konstanten Lenkwinkel, eine konstante Geschwindigkeit und eine konstante Querbeschleunigung und Gierrate charakterisiert.

Besonders bevorzugt unterscheidet sich das erste stationäre Fahrmanöver in seiner Art von dem zweiten stationären Fahrmanöver. Beispielsweise handelt es sich bei dem ersten stationären Fahrmanöver um eine stationäre Linkskurve und bei dem zweiten stationären Fahrmanöver um eine stationäre Geradeausfahrt, etc.

Gemäß einer bevorzugten Weiterbildung der Erfindung wird mittels der Klassifizierungsmethode mindestens eine Wahrscheinlichkeitsverteilung der Klassen bestimmt, welche jeder Klasse von Schwerpunktlagen einen Wahrscheinlichkeitswert zuordnet.

Durch die räumliche Verteilung der Klassen folgt mit der Ausgabe des Klassifizierers eine räumliche Wahrscheinlichkeitsverteilung, dessen Minimum Mean Square Error (MMSE) den Schätzwert der Schwerpunktlage darstellt.

Besonders bevorzugt liegt jedes Zwischenergebnis in Form einer Wahrscheinlichkeitsverteilung vor.

Der beschriebene Klassifizierer wird bevorzugt jeweils für jedes der verwendeten stationären Fahrmanöver angewendet.

Besonders bevorzugt wird für jedes der drei verschiedenen stationären Fahrmanöver jeweils ein Klassifizierer verwendet. Die drei Klassifizierer liefern drei Wahrscheinlichkeitsverteilungen (für jedes Manöver eine Verteilung) aus denen durch Kombination und Berechnung des Minimum Mean Square Error (MMSE) der Schätzwert für die Schwerpunktlage (x, y, z) hervorgeht.

Die räumliche Wahrscheinlichkeitsverteilung wird bevorzugt mit den Wahrscheinlichkeitsverteilungen der anderen Fahrmanöver mittels Bayescher Interferenz zu einer gemeinsamen Wahrscheinlichkeitsverteilung kombiniert und führt durch anschließende Berechnung des Erwartungswerts zu einem Schätzwert für die Schwerpunktlage des Fahrzeugs.

Bevorzugt ist die Klassifizierungsmethode eine Random Forest oder Import Vector Machine Methode.

Bevorzugt werden eine laterale Koordinate und eine longitudinale Koordinate der geschätzten Schwerpunktlage bestimmt.

Bevorzugt werden mittels der Klassifizierungsmethode zuerst eine laterale Koordinate und eine longitudinale Koordinate der geschätzten Schwerpunktlage bestimmt. Besonders bevorzugt werden die laterale und longitudinale Koordinate mittels eines ersten Teil-Klassifizierers, beispielsweise einem Random Forest Klassifizierer, bestimmt. Der erste Teil-Klassifizierer bestimmt nur einen Teil der räumlichen Koordinaten: die laterale und longitudinale Koordinate, nicht die vertikale Koordinate.

Bevorzugt wird anhand der zuerst berechneten lateralen und longitudinalen Koordinate eine vertikale Koordinate der geschätzten Schwerpunktlage bestimmt.

Besonders bevorzugt erfolgt die Bestimmung der vertikalen Koordinate mittels eines weiteren, linearen Teil-Klassifizierers, in welchen die bereits bestimmten Werte der lateralen und longitudinalen Koordinate eingehen. Dieses Vorgehen vereinfacht die Berechnung und beansprucht daher weniger Rechenleistung. Der lineare Teil-Klassifizierer führt eine lineare Klassifizierung aus und berechnet hierbei anhand einer linearen Gleichung die vertikale Koordinate. In die lineare Gleichung gehen die laterale und longitudinale Koordinate als Variablen ein und/oder es gehen Eingangsgrößen des Verfahrens, beispielsweise der Rollwinkel, als Variablen ein. Es wird eine lineare Interpolation durchgeführt.

Vorteilhafterweise bestimmt der erste Teil-Klassifizierer eine Wahrscheinlichkeitsverteilung der lateralen und longitudinalen Koordinate und die Erwartungswerte dieser Wahrscheinlichkeitsverteilung werden mittels des weiteren, linearen Teil-Klassifizierers zur Bestimmung der vertikalen Koordinate herangezogen.

Vorteilhafterweise sind der erste Teil-Klassifizierer und der weitere Teil-Klassifizierer Bestandteil des Klassifizierers. Der Klassifizierer bestimmt so alle drei Raumkoordinaten.

Bevorzugt umfasst der Satz von Eingangsgrößen einen gemessenen oder geschätzten Rollwinkel des Kraftfahrzeugs. Vorteilhafterweise geht der Rollwinkel aus der Integration des Messwertes eines Rollratensensors hervor.

Bevorzugt wird zur Bestimmung der vertikalen Koordinate der geschätzten Schwerpunktlage ein Satz von Eingangsgrößen umfassend einen Rollwinkel herangezogen. Die Verwendung des Rollwinkels ermöglicht eine besonders genaue Bestimmung der vertikalen Koordinate.

Vorteilhafterweise wird mittels eines linearen Teil-Klassifizierers aus Erwartungswerten der Wahrscheinlichkeitsverteilung der lateralen und longitudinalen Koordinate in Kombination mit dem Rollwinkel die vertikale Koordinate bestimmt.

Zur Bestimmung der räumlichen Schwerpunktlage werden vorteilhafterweise Random-Forest-Klassifizierer mit Klassifizierern, welche auf linearer Interpolation basieren, kombiniert. In stationären Kurvenfahrten wird eine Wahrscheinlichkeitsverteilung in longitudinaler und lateraler Richtung von einem Random Forest Teil-Klassifizierer bereitgestellt, auf dessen Grundlage ein linearer Teil-Klassifizierer die Schwerpunkthöhe schätzt und die zweidimensionale Wahrscheinlichkeitsverteilung zu einer dreidimensionalen Wahrscheinlichkeitsverteilung ergänzt.

Erfindungsgemäß umfasst das elektronische Steuergerät eine Recheneinheit, welche ein erfindungsgemäßes Verfahren durchführt.

Vorteilhafte Ausgestaltungen der Erfindung werden im Folgenden anhand von Figuren erläutert. Es zeigen:
- Figur 1: einen beispielsgemäßen schematischen Ablauf eines Verfahrens,
- Figur 2: eine interne Struktur eines beispielsgemäßen Klassifizierers,
- Figur 3: eine dreidimensionale Darstellung des Informationsgehalts beispielhafter stationärer Fahrmanöver,
- Figur 4: eine Auswertung eines Schwerpunktschätzungsbeispiels.

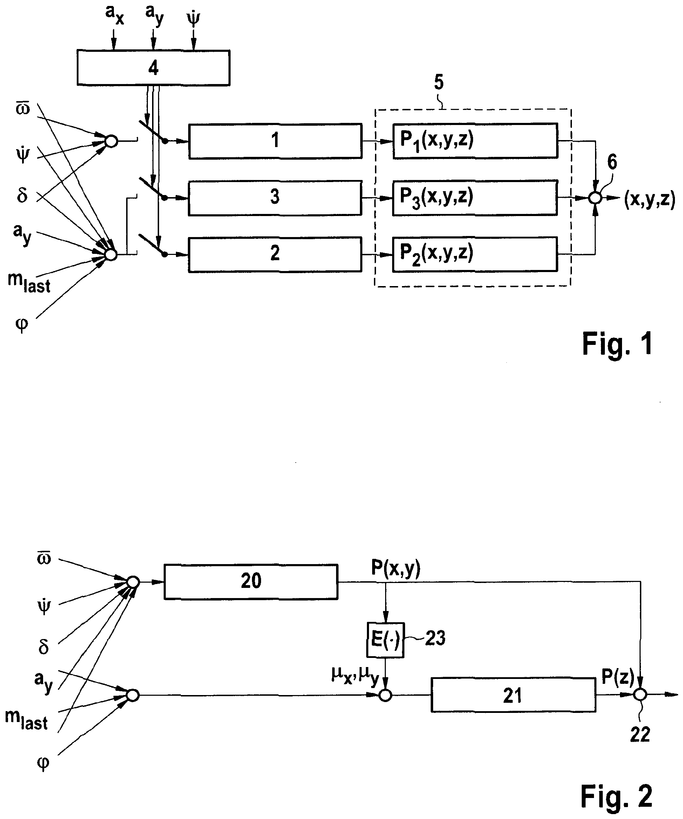

In Figur 1 ist schematisch ein Ablauf eines Verfahrens mit Eingangsgrößen *ω̅*, *ψ̇*, δ, aₓ, a_{y}, m_{load}, φ, automatischer Erkennung eines gültigen Fahrmanövers und Mittelung der rauschbehafteten Signale und Speicherung der räumlichen Wahrscheinlichkeitsverteilungen in einem Buffer 5 dargestellt.

Die Eingangsgrößen sind beispielsgemäß die Signale Mittelwert der Raddrehzahlen *ω̅*, Gierrat*ψ̇*, Lenkwinkel δ, Längs- und Querbeschleunigung *aₓ*, *a_{y}*, Schätzwert der Fahrzeugmasse *m_{load}* und Rollwinkel *φ*.

Es erfolgt eine automatische Erkennung 4 eines gültigen Fahrmanövers. Der Fahrzustand des Kraftfahrzeugs wird anhand der Eingangsgrößen Gierrate *ψ̇*, Längsbeschleunigung aₓ, und Querbeschleunigung a_{y} überwacht. Sind die Gierrate *ψ̇*, Längsbeschleunigung aₓ, und Querbeschleunigung a_{y} über ein vorgegebenes Zeitintervall konstant, so wird ein erstes stationäres Fahrmanöver erkannt. Bevorzugt wird ein stationäres Fahrmanöver erkannt, wenn die Längsbeschleunigung aₓ Null oder annähernd Null ist, wodurch auf eine konstante Geschwindigkeit geschlossen werden kann.

Zusätzlich kann auch der Lenkwinkel δ überwacht werden und ein Fahrmanöver nur als stationär erkannt werden, wenn auch der Lenkwinkel δ konstant ist. Alternativ kann die Überwachung des Lenkwinkels δ die Überwachung der Gierrate *ψ̇* ersetzen.

Ein Wert wird dabei als konstant angesehen, wenn die Varianz des Wertes über die vorgegebene Zeitspanne unterhalb eines Schwellenwertes bleibt.

Anhand der Werte der Gierrate *ψ̇* und Querbeschleunigung a_{y} wird bestimmt, um welche Art von stationärem Fahrmanöver es sich handelt: ob eine Geradeausfahrt, eine Linkskurve oder eine Rechtskurve vorliegt. Abhängig vom Resultat wird ein Klassifizierer aus einem Klassifizierer Geradeausfahrt 1, einem Klassifizierer Rechtskurve 2 oder einem Klassifizierer Linkskurve 3 ausgewählt und mit dem ausgewählten Klassifizierer weiter verfahren.

In den Klassifizierer Geradeausfahrt 1 gehen beispielsgemäß die mittlere Raddrehzahl *ω̅*, die Gierrate *ψ̇*, sowie der Lenkwinkel δ ein.

In die Klassifizierer Rechtskurve 2 und Klassifizierer Linkskurve 3 gehen beispielsgemäß zusätzlich zur mittlere Raddrehzahl *ω̅*, Gierrate *ψ̇*, und Lenkwinkel δ auch die Querbeschleunigung a_{y}, der Schätzwert der Fahrzeugmasse m_{load} und der Rollwinkel φ ein.

Durch den ausgewählten Klassifizierer 1, 2 oder 3 wird als Zwischenergebnis eine Wahrscheinlichkeitsverteilung Pᵢ (x, y, z) berechnet und im Buffer 5 abgelegt. Der Index i entspricht dem ausgewählten Klassifizierer 1, 2 oder 3.

Sobald das erste stationäre Fahrmanöver beendet ist, wird die Überwachung des Fahrzustands des Kraftfahrzeugs fortgesetzt und weitere stationäre Fahrmanöver erkannt. Für jedes erkannte stationäre Fahrmanöver wird eine neue Wahrscheinlichkeitsverteilung Pᵢ (x, y, z) berechnet und im Buffer 5 abgelegt.

Bevorzugt wird für jede Art von stationärem Fahrmanöver maximal eine Anzahl k von Wahrscheinlichkeitsverteilungen Pᵢ (x, y, z) im Buffer 5 abgelegt. Beispielsweise wird insbesondere für jede Art von stationärem Fahrmanöver genau eine Wahrscheinlichkeitsverteilung Pᵢ (x, y, z) im Buffer 5 abgelegt.

Wird eine Wahrscheinlichkeitsverteilung für ein neues stationäres Fahrmanöver berechnet, für dessen Art bereits die maximale Anzahl von Wahrscheinlichkeitsverteilungen im Buffer 5 abgelegt ist, so wird eine bereits abgelegte Wahrscheinlichkeitsverteilung durch die neue Wahrscheinlichkeitsverteilung ersetzt. Beispielsweise werden also maximal drei verschiedene stationäre Fahrmanöver verwendet, eines von jeder Art von Fahrmanöver.

Aus den im Buffer 5 abgespeicherten Wahrscheinlichkeitsverteilungen P₁ (x, y, z), P₂ (x, y, z), P₃ (x, y, z) wird mittels einer Minimum Square Error Berechnung 6 eine geschätzte Schwerpunktlage (x, y, z) berechnet.

Die Wahrscheinlichkeitsverteilungen P₁ (x, y, z), P₂ (x, y, z), P₃ (x, y, z) im Buffer 5 werden nach der Formel eines Bayes-Filter miteinander kombiniert. Aus der resultierenden gemeinsamen Wahrscheinlichkeitsverteilung P (x, y, z) wird der Minimum Square Error Schätzwert berechnet.

Bevorzugt erfolgt nach jedem neuen erkannten stationären Fahrmanöver eine neue Berechnung der geschätzte Schwerpunktlage (x, y, z).

Vorteilhafterweise wird das Verfahren beendet und keine neue Berechnung der geschätzte Schwerpunktlage (x, y, z) durchgeführt, wenn ein Abbruchkriterium erfüllt ist.

Die interne Struktur der in Figur 1 aufgeführten Klassifizierer 1, 2, 3 ist in Figur 2 dargestellt. Jeder der Klassifizierer 1, 2, 3 hat beispielsgemäß eine solche Struktur.

Beispielsgemäß werden die erfassten Werte der Raddrehzahl *ω̅*, der Gierrate *ψ̇*, des Lenkwinkels δ und der Querbeschleunigung a_{y} jeweils während eines erkannten stationären Fahrmanövers gemittelt und der jeweils gemittelte Wert als Eingangsgröße verwendet.

Beispielsgemäß werden auch der erfasste Wert des Rollwinkels φ und/oder der Schätzwert der Fahrzeugmasse m_{load} jeweils gemittelt.

Nach der Mittelung der Signale im stationären Zustand wird der resultierende Merkmalsvektor, der die Raddrehzahl *ω̅*, die Gierrate *ψ̇*, den Lenkwinkel δ und die Querbeschleunigung a_{y}, sowie einen Schätzwert der Fahrzeugmasse m_{load} umfasst, einem Random Forest Teil-Klassifizierer 20 zur Verfügung gestellt. Der Random Forest Teil-Klassifizierer 20 ermittelt eine Wahrscheinlichkeitsverteilung P(x, y) der Schwerpunktlage in longitudinaler und lateraler Richtung.

In einem Rechenschritt 23 werden die Erwartungswerte *µₓ, µ_{y}* der Wahrscheinlichkeitsverteilung P(x, y) bestimmt, *µₓ* ist der Erwartungswert der Verteilung in longitudinaler Richtung, *µ_{y}* in lateraler Richtung.

Auf Grundlage der Erwartungswerte *µₓ, µ_{y}* der Wahrscheinlichkeitsverteilung P(x, y) und unter Einbeziehung der Querbeschleunigung a_{y}, der geschätzten Fahrzeugmasse m_{load} und dem Rollwinkel φ wird die Wahrscheinlichkeitsverteilung in vertikaler Richtung P(z) mittels eines linearen Teil-Klassifizierers 21 bestimmt. Durch Kombination der beiden Resultate ergibt sich die Wahrscheinlichkeitsverteilung für ein Fahrmanöver P(x, y, z). Die erhaltene Wahrscheinlichkeitsverteilung wird im Buffer 5 abgelegt.

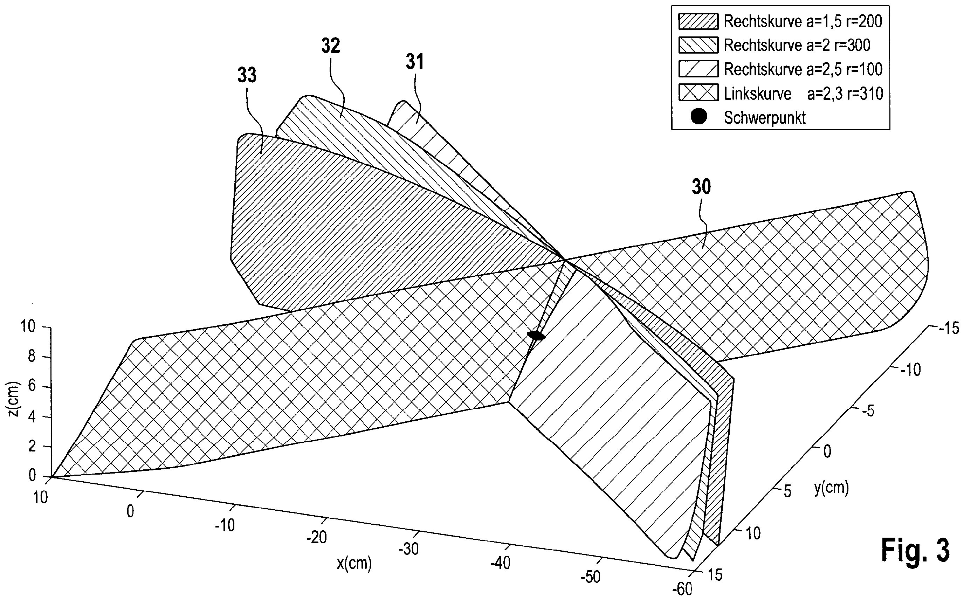

Figur 3 zeigt graphisch dargestellt den Informationsgehalt beispielhafter stationärer Fahrmanöver. Im dreidimensionalen Raum möglicher Schwerpunktlagen beschreibt der Lenkwinkel δ als stärkstes Merkmal eine Schnittgerade zwischen den Flächen möglicher Schwerpunktlagen für Rechtskurven (31, 32, 33) und einer Linkskurve (30), welche genau durch den Schwerpunkt verläuft. Die Schwerpunkthöhe wird anschließend mittels des Rollwinkels φ bestimmt.

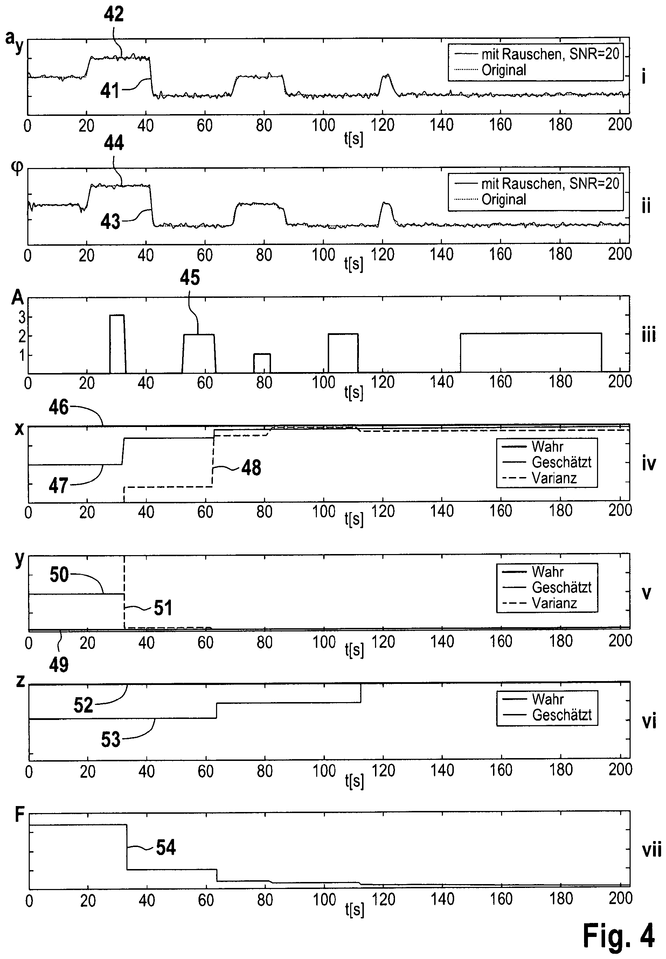

In Figur 4 ist die Auswertung einer beispielhaften Schwerpunktschätzung mit dem beispielsgemäßen Verfahren dargestellt. Es wird eine kurvenreiche Strecke mittels eines an sich bekannten Simulationsprogramms simuliert. Die Messsignale werden mit gaußschem Rauschen, beispielsweise mit dem Signal-zu-Rauschen Verhältnis SNR = 20 dB, überlagert. Die Querbeschleunigung a_{y} und der Rollwinkel φ sind mit und ohne Messrauschen dargestellt. Auf der Abszisse aller Diagramme i-vii ist die Zeit t aufgetragen. Im ersten Diagramm (i) sind ein simulierter Querbeschleunigungsverlauf 41, sowie der gleiche Verlauf mit überlagertem Rauschen 42 dargestellt. Im zweiten Diagramm (ii) sind ein simulierter Rollwinkelverlauf 43, sowie der gleiche Verlauf mit überlagertem Rauschen 44 dargestellt. Die Zustandserkennung und die Schwerpunktschätzung werden anhand der verrauschten Signale durchgeführt.

Die Zustandserkennung 4 erkennt stationäre Fahrmanöver und teilt diese nach ihrer Art A ein. Im dritten Diagramm (iii) ist das Ergebnis der Erkennung als Verlauf 45 aufgetragen. Dabei wird die erkannte Art A auf der Ordinate als Wert (1:Geradeausfahrt, 2:Rechtskurve und 3:Linkskurve) abgebildet. In diesem Beispiel werden fünf stationäre Manöver korrekt erkannt: Linkskurve, Rechtskurve, Geradeausfahrt, Rechtskurve, Rechtskurve.

Während ein stationäres Manöver vorliegt, werden die Signale jeweils gemittelt und bei Ende eines Manövers dem jeweiligen Klassifizierer 1, 2, 3 als einzelner Merkmalsvektor von Eingangsgrößen übergeben. In diesem Beispiel werden insgesamt fünf Klassifikationen durchgeführt, entsprechend den fünf erkannten sukzessiven stationären Fahrmanövern. Für die Schwerpunktschätzung wird der MMSE-Schätzwert (x, y, z) verwendet.

Es werden die Komponenten des MMSE-Schätzwertes x, y und z dargestellt in den Diagrammen iv-vi. Diese gehen in jedem Zeitschritt aus der Verknüpfung der Wahrscheinlichkeitsverteilungen Pᵢ (x, y, z) aus dem Buffer 5 hervor. In den Diagrammen iv-vi sind aufgetragen der wahre Wert der jeweiligen Koordinate (der für das Beispiel angenommene Wert) x 46, y 49, z 52 sowie der Verlauf des durch das Verfahren geschätzten Wertes x 47, y 50, z 53. Für die longitudinale Koordinate x und die laterale Koordinate y sind auch jeweils der Verlauf der Varianz der Wahrscheinlichkeitsverteilung x 48, y 51 aufgetragen.

Zu Beginn des Verfahrens entsprechen die Wahrscheinlichkeitsverteilungen für alle Koordinaten im Buffer 5 einer Gleichverteilung, bei der alle Klassen von Schwerpunktlagen als gleich wahrscheinlich angenommen werden. Daraus ergibt sich ein MMSE-Schätzwert (x, y, z) in der Mitte des Bereichs möglicher Schwerpunktlagen.

Nach der ersten Linkskurve im Beispiel wird die Wahrscheinlichkeitsverteilung P₃ (x, y, z) für diese Linkskurve im Buffer 5 abgelegt und die x- und y- Komponenten 47, 50 nähern sich dem wahren Wert 46, 49. Die Klassifikationsergebnisse der nachfolgenden stationären Manöver gehen ebenso in den Buffer 5 ein. Ein Schätzfehler F, dessen Verlauf im Diagramm vii aufgetragen ist, nimmt mit jedem neuen stationären Fahrmanöver und der damit verbundenen Klassifikation ab.

Bevorzugt gilt das Abbruchkriterium für das Verfahren als erfüllt, wenn der Schätzfehler F unter einen Fehlerschwellenwert fällt.

## Patentansprüche

1. Verfahren, bei dem die Lage des Schwerpunkts eines fahrenden Kraftfahrzeugs ermittelt wird, wobei mindestens ein Satz von zusammengehörenden Eingangsgrößen berücksichtigt wird, der Satz von Eingangsgrößen umfasst mindestens eine Längsbeschleunigung des Kraftfahrzeugs, eine Querbeschleunigung des Kraftfahrzeugs, eine Gierrate des Kraftfahrzeugs und mindestens eine Raddrehzahl, insbesondere vier Raddrehzahlen,
**dadurch gekennzeichnet, dass** der Satz von Eingangsgrößen während eines stationären Fahrmanövers (1, 2, 3) ermittelt wird, und dass eine Menge an möglichen Schwerpunktlagen als Klassen festgelegt wird und mittels einer lernbasierten Klassifizierungsmethode anhand des Satzes von Eingangsgrößen eine Klasse ausgewählt wird, die eine geschätzte Schwerpunktlage angibt.

2. Verfahren nach Anspruch 1, **dadurch gekennzeichnet, dass** unter Verwendung von Simulationsdaten eines Modells des Kraftfahrzeugs eine nichtlineare Zuordnung zwischen Sätzen von Eingangsgrößen und Klassen von Schwerpunktlagen eingelernt wird.

3. Verfahren nach einem der vorhergehenden Ansprüche, **dadurch gekennzeichnet, dass** der Satz von Eingangsgrößen einen Lenkwinkel umfasst und/oder dass der Satz von Eingangsgrößen einen Schätzwert einer Gesamtmasse des Kraftfahrzeugs umfasst und/oder dass der Satz von Eingangsgrößen einen gemessenen oder geschätzten Rollwinkel umfasst.

4. Verfahren nach Anspruch 3, **dadurch gekennzeichnet, dass** ein stationäres Fahrmanöver (1, 2, 3) erkannt wird, wenn über einen vorgegebenen Zeitraum eine Fahrzeuggeschwindigkeit, sowie die Querbeschleunigung und/oder Gierrate und/oder der Lenkwinkel konstant sind, wobei:
- die Fahrzeuggeschwindigkeit als konstant betrachtet wird, wenn die Varianz der Fahrzeuggeschwindigkeit unterhalb eines ersten Schwellenwerts liegt,
- die Querbeschleunigung als konstant betrachtet wird, wenn die Varianz der Querbeschleunigung unterhalb eines zweiten Schwellenwerts liegt,
- die Gierrate als konstant betrachtet wird, wenn die Varianz der Gierrate unterhalb eines vierten Schwellenwerts liegt,
- der Lenkwinkels als konstant betrachtet wird, wenn die Varianz des Lenkwinkels unterhalb eines dritten Schwellenwerts liegt.

5. Verfahren nach einem der vorhergehenden Ansprüche, **dadurch gekennzeichnet, dass** mittels der Klassifizierungsmethode mindestens zwei Zwischenergebnisse anhand unterschiedlicher Sätze von Eingangsgrößen ermittelt werden und die geschätzte Schwerpunktlage anhand der mindestens zwei Zwischenergebnisse berechnet wird, insbesondere mittels einer Minimum Mean Square Error Methode.

6. Verfahren nach einem der vorhergehenden Ansprüche, **dadurch gekennzeichnet, dass** jedes stationäre Fahrmanöver (1, 2, 3) nach seiner Art eingeteilt wird in stationäre Linkskurve (3), stationäre Rechtskurve (2) oder stationäre Geradeausfahrt (1).

7. Verfahren nach Anspruch 6, **dadurch gekennzeichnet, dass** mindestens zwei Sätze von Eingangsgrößen für die Bestimmung der Schwerpunktlage berücksichtigt werden, wobei ein erster Satz von Eingangsgrößen während eines ersten stationären Fahrmanövers (1, 2, 3) ermittelt wird und ein zweiter Satz von Eingangsgrößen während eines zweiten stationären Fahrmanövers (1, 2, 3) ermittelt wird und dass das erste stationäre Fahrmanöver (1, 2, 3) sich in seiner Art von dem zweiten stationären Fahrmanöver (1, 2, 3) unterscheidet.

8. Verfahren nach einem der vorhergehenden Ansprüche, **dadurch gekennzeichnet, dass** mittels der Klassifizierungsmethode, insbesondere einer Random Forest oder Import Vector Machine Methode, mindestens eine Wahrscheinlichkeitsverteilung der Klassen bestimmt wird, welche jeder Klasse einen Wahrscheinlichkeitswert zuordnet.

9. Verfahren nach einem der vorhergehenden Ansprüche, **dadurch gekennzeichnet, dass** mittels der Klassifizierungsmethode zuerst eine laterale Koordinate und eine longitudinale Koordinate der geschätzten Schwerpunktlage bestimmt werden und anschließend anhand der lateralen und der longitudinalen Koordinate, insbesondere mittels einer linearen Klassifizierung, eine vertikale Koordinate der geschätzten Schwerpunktlage bestimmt wird.

10. Verfahren nach Anspruch 9, **dadurch gekennzeichnet, dass** zur Bestimmung der vertikalen Koordinate der geschätzten Schwerpunktlage ein Satz von Eingangsgrößen umfassend den Rollwinkel herangezogen wird.

11. Elektronisches Steuergerät, insbesondere für ein Bremssystem eines Kraftfahrzeugs, **gekennzeichnet durch** eine Recheneinheit, welche ein Verfahren nach einem der vorhergehenden Ansprüche durchführt.

## Claims

1. Method in which the position of the center of gravity of a moving motor vehicle is ascertained, wherein at least one set of related input variables is taken into consideration, and the set of input variables comprises at least a longitudinal acceleration of the motor vehicle, a lateral acceleration of the motor vehicle, a yaw rate of the motor vehicle and at least one wheel rotational speed, in particular four wheel rotational speeds,
**characterized in that** the set of input variables is ascertained during a steady-state driving maneuver (1, 2, 3), and **in that** a quantity of possible center of gravity positions is defined as classes and, by means of a learning-based classification method, on the basis of the set of input variables, a class is selected which indicates an estimated center of gravity position.

2. Method according to Claim 1, **characterized in that** a non-linear assignment between sets of input variables and classes of center of gravity positions is learned using simulation data of a model of the motor vehicle.

3. Method according to either of the preceding claims, **characterized in that** the set of input variables comprises a steering angle and/or **in that** the set of input variables comprises an estimated value of a total mass of the motor vehicle and/or **in that** the set of input variables comprises a measured or estimated roll angle.

4. Method according to Claim 3, **characterized in that** a steady-state driving maneuver (1, 2, 3) is identified if a vehicle speed and also the lateral acceleration and/or yaw rate and/or the steering angle are constant over a predefined period of time, wherein:
- the vehicle speed is regarded as constant if the variance of the vehicle speed lies below a first threshold value,
- the lateral acceleration is regarded as constant if the variance of the lateral acceleration lies below a second threshold value,
- the yaw rate is regarded as constant if the variance of the yaw rate lies below a fourth threshold value,
- the steering angle is regarded as constant if the variance of the steering angle lies below a third threshold value.

5. Method according to any of the preceding claims, **characterized in that**, by means of the classification method, at least two intermediate results are ascertained on the basis of different sets of input variables, and the estimated center of gravity position is calculated on the basis of the at least two intermediate results, in particular by means of a minimum mean square error method.

6. Method according to any of the preceding claims, **characterized in that** each steady-state driving maneuver (1, 2, 3) is classified according to its type into steady-state left-hand corner (3), steady-state right-hand corner (2) or steady-state straight-ahead driving (1).

7. Method according to Claim 6, **characterized in that** at least two sets of input variables are taken into consideration for the determination of the center of gravity position, wherein a first set of input variables is ascertained during a first steady-state driving maneuver (1, 2, 3) and a second set of input variables is ascertained during a second steady-state driving maneuver (1, 2, 3), and **in that** the first steady-state driving maneuver (1, 2, 3) differs in type from the second steady-state driving maneuver (1, 2, 3).

8. Method according to any of the preceding claims, **characterized in that**, by means of the classification method, in particular a random forest or import vector machine method, at least one probability distribution of the classes is determined, which assigns a probability value to each class.

9. Method according to any of the preceding claims, **characterized in that**, by means of the classification method, firstly a lateral coordinate and a longitudinal coordinate of the estimated center of gravity position are determined, and subsequently a vertical coordinate of the estimated center of gravity position is determined on the basis of the lateral and longitudinal coordinates, in particular by means of a linear classification.

10. Method according to Claim 9, **characterized in that** a set of input variables comprising the roll angle is taken into consideration for determining the vertical coordinate of the estimated center of gravity position.

11. Electronic control unit, in particular for a brake system of a motor vehicle, **characterized by** a processing unit which carries out a method according to any of the preceding claims.

## Revendications

1. Procédé, avec lequel est déterminée la position du centre de gravité d'un véhicule automobile en déplacement, au moins un jeu de grandeurs d'entrée associées les unes aux autres étant pris en compte, le jeu de grandeurs d'entrée comportant au moins une accélération longitudinale du véhicule automobile, une accélération transversale du véhicule automobile, un taux de lacet du véhicule automobile et au moins une vitesse de rotation de roue, notamment quatre vitesses de rotation de roue, **caractérisé en ce que** le jeu de grandeurs d'entrée est déterminé pendant une manœuvre de conduite stationnaire (1, 2, 3) et **en ce qu'**un ensemble de positions de centre de gravité possibles est spécifié en tant que classes et une classe qui indique une position de centre de gravité estimée est sélectionnée au moyen d'une méthode de classification basée sur l'apprentissage à l'aide du jeu de grandeurs d'entrée.

2. Procédé selon la revendication 1, **caractérisé en ce qu'**une attribution non linéaire entre les jeux de grandeurs d'entrée et les classes de positions de centre de gravité est apprise en utilisant des données de simulation d'un modèle du véhicule automobile.

3. Procédé selon l'une des revendications précédentes, **caractérisé en ce que** le jeu de grandeurs d'entrée comprend un angle de braquage et/ou **en ce que** le jeu de grandeurs d'entrée comprend une valeur estimée d'une masse totale du véhicule automobile et/ou **en ce que** le jeu de grandeurs d'entrée comprend un angle de roulis mesuré ou estimé.

4. Procédé selon la revendication 3, **caractérisé en ce qu'**une manœuvre de conduite stationnaire (1, 2, 3) est reconnue lorsqu'une vitesse du véhicule ainsi que l'accélération transversale et/ou le taux de lacet et/ou l'angle de braquage sont constants sur une période prédéfinie, procédé selon lequel :
- la vitesse du véhicule est considérée constante lorsque la variance de la vitesse du véhicule est inférieure à une première valeur de seuil,
- l'accélération transversale est considérée constante lorsque la variance de l'accélération transversale est inférieure à une deuxième valeur de seuil,
- le taux de lacet est considéré constant lorsque la variance du taux de lacet est inférieure à une quatrième valeur de seuil,
- l'angle de braquage est considéré constant lorsque la variance de l'angle de braquage est inférieure à une troisième valeur de seuil.

5. Procédé selon l'une des revendications précédentes, **caractérisé en ce qu'**au moins deux résultats intermédiaires sont déterminés au moyen de la méthode de classification à l'aide de jeux de grandeurs d'entrée différents, et la position estimée du centre de gravité est calculée à l'aide des résultats intermédiaires, notamment au moyen d'une méthode de l'erreur quadratique moyenne minimale.

6. Procédé selon l'une des revendications précédentes, **caractérisé en ce que** chaque manœuvre de conduite stationnaire (1, 2, 3) est classée en fonction de sa nature en virage à gauche stationnaire (3), virage à droite stationnaire (2) ou déplacement en ligne droite stationnaire (1).

7. Procédé selon la revendication 6, **caractérisé en ce qu'**au moins deux jeux de grandeurs d'entrée sont pris en compte pour la stipulation de la position du centre de gravité, un premier jeu de grandeurs d'entrée étant déterminé pendant une première manœuvre de conduite stationnaire (1, 2, 3) et un deuxième jeu de grandeurs d'entrée étant déterminé pendant une deuxième manœuvre de conduite stationnaire (1, 2, 3) et **en ce que** la première manœuvre de conduite stationnaire (1, 2, 3) se différencie de la deuxième manœuvre de conduite stationnaire (1, 2, 3) de par sa nature.

8. Procédé selon l'une des revendications précédentes, **caractérisé en ce qu'**au moins une distribution de probabilité des classes, laquelle attribue une valeur de probabilité à chaque classe, est stipulée au moyen de la méthode de classification, notamment une forêt d'arbres décisionnels ou une méthode de machine à vecteurs d'importation.

9. Procédé selon l'une des revendications précédentes, **caractérisé en ce qu'**au moyen de la méthode de classification sont tout d'abord stipulées une coordonnée latérale et une coordonnée longitudinale de la position estimée du centre de gravité, et ensuite une coordonnée verticale de la position estimée du centre de gravité est stipulée au moyen des coordonnées latérale et longitudinale, notamment au moyen d'une classification linéaire.

10. Procédé selon la revendication 9, **caractérisé en ce qu'**un jeu de grandeurs d'entrée comprenant l'angle de roulis est utilisé pour stipuler la coordonnée verticale de la position estimée du centre de gravité.

11. Contrôleur électronique, notamment pour un système de freinage d'un véhicule automobile, **caractérisé par** une unité de calcul qui met en œuvre un procédé selon l'une des revendications précédentes.
